# FASCICULE DE BREVET EUROPEEN

(11) **EP 3 650 282 B1**
(45) Date de publication et mention de la délivrance du brevet: **03.01.2024**
(21) Numéro de dépôt: 19208551.2
(22) Date de dépôt: 12.11.2019
(51) Int. Cl.: B60R 16/03

(54) **ENSEMBLE COMPRENANT UN SUPPORT ET AU MOINS UN COMPOSANT ÉLECTRONIQUE ET PROCÉDÉS DE MONTAGE ET DE DÉMONTAGE ASSOCIÉS**
EINHEIT, DIE EINE HALTERUNG UND MINDESTENS EIN ELEKTRONISCHES BAUTEIL UMFASST, UND ENTSPRECHENDES MONTAGE- UND DEMONTAGEVERFAHREN
ASSEMBLY COMPRISING A SUPPORT AND AT LEAST ONE ELECTRONIC COMPONENT AND ASSOCIATED MOUNTING AND REMOVAL METHODS

(30) Priorité: 12.11.2018 FR 1860435
(43) Date de publication de la demande: 13.05.2020
(73) Titulaire: ALSTOM Holdings, 93400 Saint-Ouen-sur-Seine (FR)
(72) Inventeur: LANGLOIS, Francis, 59310 FAUMONT (FR)
(74) Mandataire: Lavoix

(56) Documents cités:
- EP-A1- 1 479 286
- DE-A1-102010 003 073
- DE-U1-202008 011 979
- DE-U1-202012 102 874
- DE-U1-202015 100 151
- US-A1- 2010 019 689
- US-A1- 2011 176 308

## Description

La présente invention concerne un ensemble comprenant :
- un support s'étendant principalement selon une direction longitudinale et définissant un fond,
- au moins un composant électronique comprenant un premier côté et un deuxième côté, le composant électronique étant fixé en contact avec le fond du support, comme par exemple illustré dans US 2011/176308.

Ce type d'ensemble est par exemple utilisé dans les voitures de véhicule ferroviaire. En effet, les parois internes des voitures comprennent généralement de nombreux composants électroniques fixés directement sur lesdites parois (paroi latérales, plafond, sol) ou à l'intérieur desdites parois puis recouverts par des panneaux de garnissage. Les composants sont par exemple des sources de lumière ou autre.

Les composants électroniques sont classiquement fixés en utilisant une pluralité de vis, rondelles et écrous.

Ce type de fixation pose de nombreux problèmes. En effet, la multitude de composants présents dans une voiture de véhicule ferroviaire rend l'opération de fixation longue et fastidieuse, d'autant plus que l'opérateur est généralement dans une position inconfortable. De plus, la perte éventuelle d'un élément de fixation, tel qu'une vis, une rondelle ou un écrou dans la voiture ralentit les opérations et peut poser des problèmes de sûreté. Les opérations de démontage ou de réaménagement de la voiture de véhicule ferroviaire sont également sujettes à des temps d'opération allongés. De plus, l'utilisation d'outils de montage et de démontage de ces éléments de fixation peut présenter des risques d'altération des composants électroniques se trouvant à proximité.

L'invention vise à pallier ces inconvénients en proposant un ensemble comprenant au moins un composant électronique et un support qui soit facile et rapide à monter et à démonter dans un véhicule ferroviaire.

A cet effet, l'invention porte sur un ensemble du type précité dans lequel le support définit :
- un premier logement de réception s'étendant selon une première direction parallèle à la direction longitudinale et,
- un deuxième logement de réception s'étendant selon une deuxième direction sensiblement parallèle à la direction longitudinale et recevant le deuxième côté du composant électronique,
l'ensemble comprenant en outre au moins un cordon flexible reçu dans le premier logement de réception, le composant électronique étant fixé par encliquetage sur le support, le premier côté étant en appui sur le cordon flexible et comprimant le cordon flexible selon une direction sensiblement perpendiculaire à la direction longitudinale et parallèle au fond du support.

Ainsi, l'ensemble selon l'invention permet un montage/démontage facile et rapide tout en assurant un maintien optimal du composant électronique sur le support sans qu'il soit nécessaire d'utiliser des éléments de fixation tels que des vis ou des dispositifs de fixation fixant le composant électronique sur le support.

L'ensemble selon l'invention peut comprendre une ou plusieurs des caractéristiques suivantes, considérées individuellement ou selon toutes les combinaisons techniquement possibles :
- le composant électronique est une bande à diodes électroluminescentes ;
- le cordon flexible est en mousse de silicone ;
- le premier logement de réception a une forme cylindrique ;
- le cordon flexible comprend au moins une portion présentant une forme sensiblement complémentaire du premier logement de réception ;
- le support comprend au moins un profilé présentant une section en forme de C selon une direction sensiblement perpendiculaire à la direction longitudinale, le profilé définissant le premier logement de réception et le deuxième logement de réception ;
- le composant électronique comprend au moins une encoche adaptée pour recevoir un outil ; et
- l'encoche est plus proche du deuxième côté du composant électronique que du premier côté du composant électronique.

L'invention a également pour objet un procédé de montage d'un ensemble tel que décrit précédemment comprenant les étapes suivantes :
- insertion du cordon flexible dans le premier logement de réception du support,
- fixation par encliquetage du composant électronique sur le support en comprimant le cordon flexible avec le premier côté du composant électronique et en insérant le deuxième côté du composant électronique dans le deuxième logement de réception du support.

L'invention porte aussi sur un procédé de démontage d'un ensemble tel que décrit précédemment, le composant électronique comprenant au moins une encoche, comprenant les étapes suivantes :
- insertion d'un outil dans l'encoche,
- désinsertion du deuxième côté du composant électronique du deuxième logement de réception du support par compression du cordon flexible avec le premier côté du composant électronique à l'aide de l'outil.

D'autres caractéristiques et avantages de l'invention ressortiront de la description détaillée qui suit, donnée à titre d'exemple et nullement limitative, en référence aux figures annexées, parmi lesquelles :
- la figure 1 est une représentation en perspective d'un ensemble selon l'invention, et
- la figure 2 est une section transversale de l'ensemble de la figure 1.

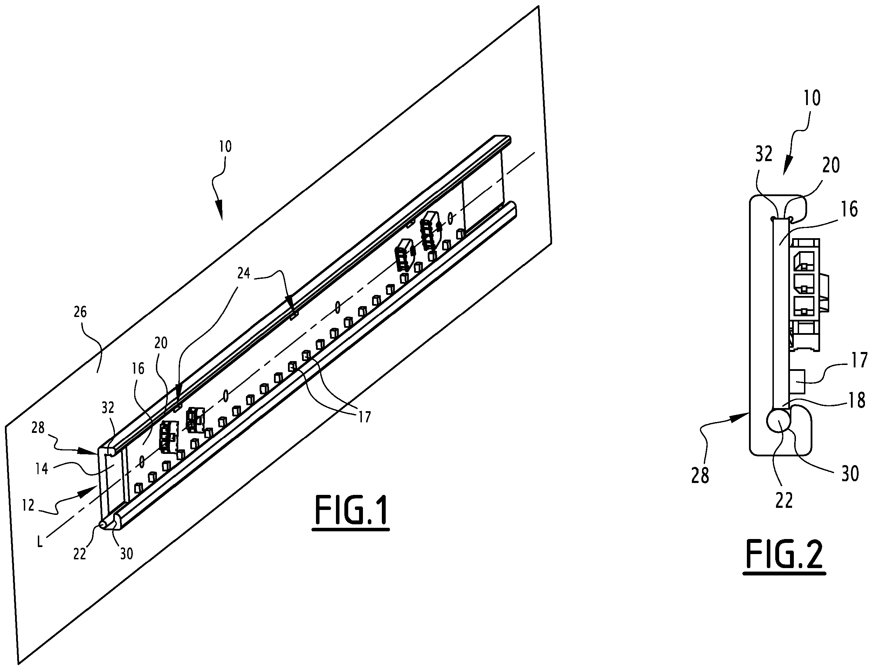

En référence aux figures 1 et 2, on décrit un ensemble 10 selon l'invention comprenant un support 12 s'étendant principalement selon une direction longitudinale principale L et définissant un fond 14.

L'ensemble 10 comprend au moins un composant électronique 16 comportant un premier côté 18 et un deuxième côté 20, et un cordon flexible 22.

Le composant électronique 16 est fixé en contact avec le fond 14 du support 12 comme représenté sur la figure 1.

Le composant électronique 16 est par exemple un circuit électronique.

Le circuit électronique est par exemple une bande à diodes électroluminescentes 17 (abrégées usuellement en DEL en langue française, ou LED en langue anglaise).

Ce type de bande à diodes électroluminescentes 17 est typiquement utilisé à l'intérieur des voitures de véhicules ferroviaires comme source d'éclairage ou comme guide lumineux pour les passagers de ces voitures.

En variante, le circuit électronique est une carte électronique appartenant à un système de ventilation de la voiture de véhicule ferroviaire ou à un système sonore intégré dans la voiture et destiné à diffuser des messages d'annonce ou des signaux sonores.

Avantageusement, le composant électronique 16 comprend au moins une encoche 24 adaptée pour recevoir un outil, par exemple un tournevis plat.

L'encoche 24 est par exemple une encoche traversante, comme visible sur la figure 1.

Préférentiellement, l'encoche 24 est plus proche du deuxième côté 20 du composant électronique 16 que du premier côté 18 du composant électronique 16.

Ceci facilite le retrait du composant électronique 16 avec l'outil en permettant d'améliorer l'effet de « bras de levier » lors de la désinsertion du composant électronique 16 du support 12.

Le support 12 est par exemple adapté pour être fixé sur un panneau 26.

En variante, le support 12 est fixé ou venu de matière avec un élément de garnissage de type porte-bagages ou luminaire, de manière à générer un gain de masse et un gain économique en intégrant un maximum de fonctions aux équipements adjacents existants.

Le panneau 26 est par exemple une paroi interne latérale de la voiture du véhicule ferroviaire, un sol de la voiture ou un plafond de la voiture.

En variante, le panneau 26 est destiné à être recouvert par une paroi de garnissage.

Le panneau 26 est par exemple en métal, par exemple en aluminium.

Le support 12 comprend un profilé 28 présentant une section en forme de C selon une direction sensiblement perpendiculaire à la direction longitudinale L.

Le support 12, et plus particulièrement le profilé 28, définit un premier logement de réception 30 et un deuxième logement de réception 32 du composant électronique 16 s'étendant respectivement selon une première direction et une deuxième direction sensiblement parallèles à la direction longitudinale L.

Le premier logement de réception 30 a par exemple une forme cylindrique et le fond du premier logement de réception 30 forme une gorge de forme sensiblement complémentaire à celle du cordon flexible 22.

Le premier logement de réception 30 reçoit le cordon flexible 22.

Le deuxième logement de réception 32 forme une encoche destinée à recevoir le deuxième côté 20 du composant électronique 16.

Préférentiellement, le profilé 28 présente une longueur supérieure ou égale à la longueur du composant électronique 16.

Le profilé 28 est par exemple en métal, préférentiellement en aluminium.

Le composant électronique 16 est fixé par encliquetage sur le support 12. Le premier côté 18 du composant électronique 16 est reçu dans le premier logement de réception 30 et est placé en appui sur le cordon flexible 22 de façon à comprimer le cordon flexible 22 selon une direction sensiblement perpendiculaire à la direction longitudinale L et parallèle au fond 14 du support 12.

Ceci est particulièrement avantageux car l'ensemble 10 selon l'invention est ainsi peu sensible aux tolérances d'usinage du support 12 ou du composant électronique 16 grâce au cordon flexible 22 qui, par contre-réaction, assure un bon maintien du composant électronique 16 sur le support 12.

Le cordon flexible 22 présente de préférence une forme cylindrique.

Le cordon flexible 22 comprend au moins une portion présentant une forme sensiblement complémentaire du premier logement de réception 30.

Ainsi, la fixation du composant électronique 16 se fait sans jeu avec le support 12. Ceci assure un maintien optimal du composant électronique 16 sur le support 12.

Avantageusement, le cordon flexible 22 est en mousse de silicone. Ainsi, le cordon flexible 22 présente de bonnes qualités de résistance au feu.

Un procédé de montage d'un ensemble 10 selon l'invention va maintenant être décrit.

Le procédé comprend tout d'abord une étape d'insertion du cordon flexible 22 dans le premier logement de réception 30 du support 12.

Puis, le composant électronique 16 est fixé par encliquetage sur le support 12 en comprimant le cordon flexible 22 avec le premier côté 18 du composant électronique 16 et en insérant le deuxième côté 20 du composant électronique 16 dans le deuxième logement de réception 32 du support 12.

Pour ce faire, le composant électronique 16 est par exemple incliné par rapport au support 12 et une force de compression est exercée sur le cordon flexible 22 par l'utilisateur.

Lorsque le premier côté 18 du composant électronique 16 est inséré dans le premier logement de réception 30 du support 12, par contre-réaction, le cordon flexible 22 exerce une force de compression sur le premier côté 18 du composant électronique 16 et permet ainsi de maintenir le composant électronique 16 fixé sur le support 12 en assurant le maintien du deuxième côté 20 dans le deuxième logement de réception 32 du support.

Un procédé de démontage d'un ensemble 10 selon l'invention va maintenant être décrit.

Le procédé comprend une étape d'insertion d'un outil, par exemple un tournevis plat dans l'encoche 24 du composant électronique 16. L'utilisateur utilise ensuite l'outil comme un « bras de levier » pour désinsérer le deuxième côté 20 du composant électronique 16 du deuxième logement de réception 32, en comprimant le cordon flexible 22 avec le premier côté 18 du composant électronique 16.

Le composant électronique 16 peut alors être aisément retiré.

Selon un deuxième mode de réalisation non représenté, le support 12 comprend une pluralité de profilés.

L'ensemble comprend en outre une pluralité de cordons flexibles associés.

La longueur des profilés est inférieure à la longueur du composant électronique 16.

Les profilés sont par exemple fixés sur le panneau 26 à intervalles réguliers ou irréguliers et assurent le maintien du composant électronique 16 uniquement au niveau de certaines parties du composant électronique 16.

En variante au premier mode et au deuxième mode de réalisation, la longueur du cordon flexible 22 est inférieure à la longueur du premier logement de réception 30.

Ainsi, l'ensemble 10 selon l'invention est particulièrement avantageux car la fixation d'un composant électronique 16 sur le support 12 est simple, rapide et ne nécessite pas d'éléments de fixation complémentaires tels que des vis, rondelles et écrous. De plus, l'absence de trous sur le composant électronique 16, nécessaires pour fixer le composant électronique 16 avec des vis par exemple, permet d'augmenter la surface utile du composant électronique 16, par exemple pour optimiser la répartition des pistes du circuit imprimé sur le composant électronique 16.

## Revendications

1. Ensemble (10) comprenant :
- un support (12) s'étendant principalement selon une direction longitudinale (L) et définissant un fond (14),
- au moins un composant électronique (16) comprenant un premier côté (18) et un deuxième côté (20), le composant électronique (16) étant fixé en contact avec le fond (14) du support (12), **caractérisé en ce que**
le support (12) définit :
- un premier logement de réception (30) s'étendant selon une première direction parallèle à la direction longitudinale (L) et,
- un deuxième logement de réception (32) s'étendant selon une deuxième direction sensiblement parallèle à la direction longitudinale (L) et recevant le deuxième côté (20) du composant électronique (16),
l'ensemble (10) comprenant en outre au moins un cordon flexible (22) reçu dans le premier logement de réception (30), le composant électronique (16) étant fixé par encliquetage sur le support (12), le premier côté (18) étant en appui sur le cordon flexible (22) et comprimant le cordon flexible (22) selon une direction sensiblement perpendiculaire à la direction longitudinale (L) et parallèle au fond (14) du support (12).

2. Ensemble (20) selon la revendication 1, dans lequel le composant électronique (16) est une bande à diodes électroluminescentes (17).

3. Ensemble (10) selon la revendication 1 ou 2, dans lequel le cordon flexible (22) est en mousse de silicone.

4. Ensemble (10) selon l'une quelconque des revendications 1 à 3, dans lequel le premier logement de réception (30) a une forme cylindrique.

5. Ensemble (10) selon l'une quelconque des revendications 1 à 4, dans lequel le cordon flexible (22) comprend au moins une portion présentant une forme sensiblement complémentaire du premier logement de réception (30).

6. Ensemble (10) selon l'une quelconque des revendications 1 à 5, dans lequel le support (12) comprend au moins un profilé (28) présentant une section en forme de C selon une direction sensiblement perpendiculaire à la direction longitudinale (L), le profilé (28) définissant le premier logement de réception (30) et le deuxième logement de réception (32).

7. Ensemble (10) selon l'une quelconque des revendications 1 à 6, dans lequel le composant électronique (16) comprend au moins une encoche (24) adaptée pour recevoir un outil.

8. Ensemble (10) selon la revendication 7, dans lequel l'encoche (24) est plus proche du deuxième côté (20) du composant électronique (16) que du premier côté (18) du composant électronique (16).

9. Procédé de montage d'un ensemble (10) selon la revendication 1 à 8, comprenant les étapes suivantes :
- insertion du cordon flexible (22) dans le premier logement de réception (30) du support (12),
- fixation par encliquetage du composant électronique (16) sur le support (12) en comprimant le cordon flexible (22) avec le premier côté (18) du composant électronique (16) et en insérant le deuxième côté (20) du composant électronique (16) dans le deuxième logement de réception (32) du support (12).

10. Procédé de démontage d'un ensemble (10) selon la revendication 1 à 8, le composant électronique (16) comprenant au moins une encoche (24), le procédé comprenant les étapes suivantes :
- insertion d'un outil dans l'encoche (24),
- désinsertion du deuxième côté (20) du composant électronique (16) du deuxième logement de réception (32) du support (12) par compression du cordon flexible (22) avec le premier côté (18) du composant électronique (16) à l'aide de l'outil.

## Patentansprüche

1. Anordnung (10), umfassend:
- einen Träger (12), der sich hauptsächlich in einer Längsrichtung (L) erstreckt und einen Boden (14) definiert,
- mindestens eine elektronische Komponente (16), umfassend eine erste Seite (18) und eine zweite Seite (20), wobei die elektronische Komponente (16) in Kontakt mit dem Boden (14) des Trägers (12) befestigt ist, **dadurch gekennzeichnet, dass**
der Träger (12) Folgendes definiert:
- einen ersten Aufnahmesitz (30), der sich in einer ersten Richtung parallel zu der Längsrichtung (L) erstreckt, und,
- einen zweiten Aufnahmesitz (32), der sich in einer zweiten Richtung im Wesentlichen parallel zu der Längsrichtung (L) erstreckt und die zweite Seite (20) der elektronischen Komponente (16) aufnimmt,
die Anordnung (10) ferner umfassend mindestens eine flexible Schnur (22), die in dem ersten Aufnahmesitz (30) aufgenommen ist, wobei die elektronische Komponente (16) durch Einrasten an dem Träger (12) befestigt ist, wobei die erste Seite (18) an der flexiblen Schnur (22) anliegt und die flexible Schnur (22) in einer Richtung zusammendrückt, die im Wesentlichen senkrecht zu der Längsrichtung (L) und parallel zu dem Boden (14) des Trägers (12) ist.

2. Anordnung (20) nach Anspruch 1, wobei die elektronische Komponente (16) ein Leuchtdiodenstreifen (17) ist.

3. Anordnung (10) nach Anspruch 1 oder 2, wobei die flexible Schnur (22) aus Silikonschaum ist.

4. Anordnung (10) nach einem der Ansprüche 1 bis 3, wobei der erste Aufnahmesitz (30) eine zylindrische Form aufweist.

5. Anordnung (10) nach einem der Ansprüche 1 bis 4, wobei die flexible Schnur (22) mindestens einen Abschnitt umfasst, der eine Form aufweist, die im Wesentlichen komplementär zu dem ersten Aufnahmesitz (30) ist.

6. Anordnung (10) nach einem der Ansprüche 1 bis 5, wobei der Träger (12) mindestens ein Profil (28) umfasst, das mit einen C-förmigen Querschnitt in einer Richtung im Wesentlichen senkrecht zu der Längsrichtung (L) aufweist, wobei das Profil (28) den ersten Aufnahmesitz (30) und den zweiten Aufnahmesitz (32) definiert.

7. Anordnung (10) nach einem der Ansprüche 1 bis 6, wobei die elektronische Komponente (16) mindestens eine Kerbe (24) umfasst, die zum Aufnehmen eines Werkzeugs geeignet ist.

8. Anordnung (10) nach Anspruch 7, wobei die Kerbe (24) näher an der zweiten Seite (20) der elektronischen Komponente (16) ist als an der ersten Seite (18) der elektronischen Komponente (16).

9. Verfahren zur Montage einer Anordnung (10) nach Anspruch 1 bis 8, umfassend die folgenden Schritte:
- Einführen der flexiblen Schnur (22) in den ersten Aufnahmesitz (30) des Trägers (12),
- Schnappbefestigen der elektronischen Komponente (16) an dem Träger (12) durch Zusammendrücken der flexiblen Schnur (22) mit der ersten Seite (18) der elektronischen Komponente (16) und Einführen der zweiten Seite (20) der elektronischen Komponente (16) in den zweiten Aufnahmesitz (32) des Trägers (12).

10. Verfahren zum Demontieren einer Anordnung (10) nach Anspruch 1 bis 8, wobei die elektronische Komponente (16) mindestens eine Kerbe (24) umfasst, das Verfahren umfassend die folgenden Schritte:
- Einführen eines Werkzeugs in die Kerbe (24),
- Lösen der zweiten Seite (20) der elektronischen Komponente (16) aus dem zweiten Aufnahmesitz (32) des Trägers (12) durch Zusammendrücken der flexiblen Schnur (22) mit der ersten Seite (18) der elektronischen Komponente (16) mittels des Werkzeugs.

## Claims

1. An assembly (10) comprising:
- a support (12) extending mainly in a longitudinal direction (L) and defining a base (14),
- at least one electronic component (16) comprising a first side (18) and a second side (20), the electronic component (16) being fixed in contact with the bottom (14) of the support (12), **characterised in that**
the support (12) defines:
- a first reception housing (30) extending in a first direction parallel to the longitudinal direction (L) and,
- a second receiving housing (32) extending in a second direction substantially parallel to the longitudinal direction (L) and receiving the second side (20) of the electronic component (16),
the assembly (10) further comprising at least one flexible cord (22) received in the first reception housing (30), the electronic component (16) being fixed by snap-fastening to the support (12), the first side (18) bearing on the flexible cord (22) and compressing the flexible cord (22) in a direction substantially perpendicular to the longitudinal direction (L) and parallel to the bottom (14) of the support (12).

2. An assembly (20) according to claim 1, in which the electronic component (16) is a light-emitting diode strip (17).

3. An assembly (10) according to claim 1 or 2, in which the flexible cord (22) is made of silicone foam.

4. An assembly (10) according to any one of claims 1 to 3, in which the first reception housing (30) has a cylindrical shape.

5. An assembly (10) according to any one of claims 1 to 4, in which the flexible cord (22) comprises at least one portion having a shape substantially complementary to the first reception housing (30).

6. An assembly (10) according to any one of claims 1 to 5, in which the support (12) comprises at least one profile (28) having a C-shaped cross-section in a direction substantially perpendicular to the longitudinal direction (L), the profile (28) defining the first reception housing (30) and the second reception housing (32).

7. An assembly (10) according to any one of claims 1 to 6, wherein the electronic component (16) comprises at least one notch (24) adapted to receive a tool.

8. An assembly (10) according to claim 7, wherein the notch (24) is closer to the second side (20) of the electronic component (16) than to the first side (18) of the electronic component (16).

9. A method of assembling an assembly (10) according to claims 1 to 8, comprising the following steps:
- insertion of the flexible cord (22) into the first receiving recess (30) of the support (12),
- snap-fastening the electronic component (16) on the support (12) by pressing the flexible cord (22) with the first side (18) of the electronic component (16) and inserting the second side (20) of the electronic component (16) into the second receiving recess (32) of the support (12).

10. A method of disassembling an assembly (10) according to claims 1 to 8, the electronic component (16) comprising at least one notch (24), the method comprising the following steps:
- inserting a tool into the notch (24),
- removing the second side (20) of the electronic component (16) from the second receiving recess (32) of the support (12) by compressing the flexible cord (22) with the first side (18) of the electronic component (16) using the tool.
